# EUROPÄISCHE PATENTSCHRIFT

(11) **EP 1 078 799 B1**
(45) Veröffentlichungstag und Bekanntmachung des Hinweises auf die Patenterteilung: **03.10.2007**
(21) Anmeldenummer: 00117829.2
(22) Anmeldetag: 18.08.2000
(51) Int. Cl.: B60J 10/08, B60J 10/10, B60J 7/06

(54) **Fahrzeug-Cabriodachstruktur**
Roof structure for convertible vehicle
Structure de toit pour véhicule cabriolet

(30) Priorität: 21.08.1999 DE 19939725
(43) Veröffentlichungstag der Anmeldung: 28.02.2001
(73) Patentinhaber: Webasto AG, 82131 Stockdorf (DE)
(72) Erfinder: Reinsch, Burkhard, 87600 Kaufbeuren (DE)
(74) Vertreter: Konnerth, Dieter Hans

(56) Entgegenhaltungen:
- EP-A- 0 353 695
- EP-A- 0 419 140
- EP-A- 0 673 797
- EP-A- 0 794 078
- DE-C- 19 543 243
- US-A- 4 838 607
- US-A- 4 902 549
- US-A- 5 054 847
- US-A- 5 669 656

## Beschreibung

Die vorliegende Erfindung betrifft eine Fahrzeug-Cabriodachstruktur mit einem Faltdach, das im Bereich von Seitenholmen beiderseits in Führungsschienen verschiebbar geführt ist.

Es ist bekannt, die Seitenholme und Führungsschienen der in Rede stehenden Fahrzeug-Cabriodachstruktur in Blechschalenbauweise zu erstellen. Aufgrund der Formgestaltung der Blechschalen und bedingt durch die Preßrichtung ergeben sich hierbei hohe Werkzeugkosten. Ferner ist es bekannt, die Seitenholme und Führungsschienen mittels parallel verlaufender Strangpreßprofile mit Außensichtflächen bzw. einer Außenhaut zu realisieren, wobei Führungsfunktionen für das Faltdach in diese Struktur integriert sind. Die Außengestalt der Seitenholme ist dabei durch Profil und Biegekontur vorgegeben und die Optik ist an die angestrebte Funktion gebunden. Zur Erzielung einer optisch einwandfreien Oberfläche und Formgenauigkeit sowie zur Erzielung geringer Führungstoleranzen ist bei dieser Vorgehensweise ein aufwendiger und teurer Biegeprozeß erforderlich.

Eine gattungsgemäße Struktur ist aus dem Dokument US 4 838 607 A bekannt.

Angesichts dieses Standes der Technik liegt der Erfindung die Aufgabe zugrunde, eine Fahrzeug-Cabriodachstruktur zu schaffen, die im Bereich der Seitenholme und Führungsschienen kostengünstig herstellbar und montierbar ist, darüber hinaus die erforderliche hochwertige Optik bezüglich der Außenhaut gewährleistet und zur lösbaren Anbringung geeignet ist.

Gelöst wird diese Aufgabe durch die kennzeichnenden Merkmale des Anspruchs 1. Vorteilhafte Weiterbildungen der Erfindung sind in den Unteransprüchen angegeben.

Mit anderen Worten basiert der erfindungsgemäße Seitenholm-/Führungsschienenaufbau der in Rede stehenden Fahrzeug-Cabriodachstruktur auf einem Strangpreßprofil für den Seitenholm, welches innenliegend die Führungsschiene aufnimmt, außenliegend den Außenhautverkleidungsabschnitt trägt und an der Unterseite eine Tür- und/oder Fensterscheibendichtung umfaßt. Demnach basiert der Seitenholm auf einem einzigen Strangpreßprofil, das nach dem Strangpreßvorgang der Biegekontur des oberen Rands der Türscheibe bzw. Fensterscheibe folgend gebogen wird. Dieser Biegevorgang stellt eine einfache Maßnahme zur Formgabe dar und ist präzise durchführbar.

Ferner ist vorteilhafterweise vorgesehen, daß das Strangpreßprofil einen dem Verlauf des Außenhaut-Verkleidungsabschnitts zumindest grob folgenden Stützsteg aufweist, mit welchem der Außenhaut-Verkleidungsabschnitt punktuell verbunden ist. Diese Maßnahme einer punktuellen Verbindung des Außenhaut-Verkleidungsabschnitts mit dem Strangpreßprofil hat im Gegensatz zum Stand der Technik, der eine präzise Vorfertigung erfordert, den Vorteil, daß der Außenhaut-Verkleidungsabschnitt toleranzausgleichend mit dem Strangpreßprofil des Seitenholms verbunden werden kann. Bevorzugt ist dabei entweder eine elastische Klebeverbindung oder eine elastische Clipsverbindung vorgesehen, die eine unterschiedliche Wärmedehnung zwischen dem Material des Außenhaut-Verkleidungsabschnitts und dem Material des Strangpreßprofils erlaubt. Anstelle einer punktuellen Verbindung dieser Teile kommt auch eine elastische Verbindung mittels beispielsweise von Kleberaupen in Betracht.

Zur einfachen Montierbarkeit ist die Tür und/oder Fensterscheibendichtung auf einen Aufstecksteg gesteckt, der von der Unterseite des Strangpreßprofils vorsteht.

Da das Strangpreßprofil typischerweise einen gebogenen Verlauf aufweist, während die Führungsschiene für das Faltdach naturgemäß gerade gestreckt gebildet ist, sind diese beiden Bestandteile der in Rede stehenden Fahrzeug-Cabriodachstruktur getrennt voneinander gebildet und miteinander bevorzugt durch Verschraubung verbunden. Um die erforderliche präzise Ausrichtung der Führungsschiene in bezug auf das Strangpreßprofil mit einfachen Mitteln gewährleisten zu können, ist vorteilhafterweise vorgesehen, daß das Strangpreßprofil innenliegend zumindest zwei sich in Längsrichtung erstreckende und quer zu dieser beabstandete Anlagerippen für die Führungsschiene und zumindest eine hierzu im wesentlichen parallele Nut zum Eingriff von selbstschneidenden Schrauben aufweist, welche Bohrungen bzw. Schlitze in der Führungsschiene bzw. in einem an dieser angeordneten Flansch oder Steg durchsetzen.

Das Strangpreßprofil mit seinen Anbindungsteilen für die Führungsschiene und den Außenhaut-Verkleidungsabschnitt sowie dem Aufstecksteg für die Tür- und/oder Fensterscheibendichtung umfaßt bevorzugt einen im Querschnitt im wesentlichen dreieckigen Kern mit einer die Stützauflage für die Außenhaut-Verkleidungsabschnitt bildenden Außenseite, einer Innenseite zur Anbindung der Führungsschiene, beispielsweise durch Verschrauben und dem nach außen abwärts vorspringenden Aufsteckflansch für die Tür- und/oder Fensterscheibendichtung. Bevorzugt sind im Rahmen dieses dreieckigen Kerns an einem innenliegenden Steg desselben die einwärts vorspringenden Anlagerippen für die Führungsschiene gebildet, während die Nut zum Eingriff selbstschneidender Schrauben zur Festlegung der Führungsschiene am Strangpreßprofil in einem innenliegenden Eckenbereich des dreieckigen Strangpreßprofilkerns vorgesehen ist.

Zur Gewährleistung der notwendigen Dichtigkeit am unteren Rand des Außenhautverkleidungsabschnitts ist die Tür- und/oder Fensterscheibendichtung vorteilhafterweise zusätzlich mit einem Dichtungsabschnitt zur Abdichtung gegenüber dem unteren Rand des Außenhautverkleidungsabschnitts versehen.

Um die notwendige Dichtigkeit an der Oberseite der Cabriodachstruktur im Bereich der Seitenholme zu gewährleisten, ist vorteilhafterweise vorgesehen, daß die Führungsschiene auf ihrer Oberseite eine Dichtung zur Abdichtung gegenüber dem geschlossenen Faltdach und dem oberen Rand des Außenhautverkleidungsabschnitts trägt. Diese Dichtung kann ebenso wie die Tür- und/oder Fensterscheibendichtung auf einen Aufstecksteg der Führungsschiene oder in den Schlitz eines Halterungsschienenabschnitts gesteckt sein.

Das Strangpreßprofil der Seitenholme besteht bevorzugt aus Aluminium oder Kunststoff.

Die erfindungsgemäß ausgebildeten Seitenholme der Fahrzeug-Cabriodachstruktur eignet sich durch ihren kompakten und funktionellen Aufbau auch zur lösbaren Verbindung mit der Fahrzeugkarosserie, wobei in diesem Fall die Seitenholme auch an den beiden Enden gegenüber der Fahrzeugkarosserie abgedichtet sind und bevorzugt diese Dichtungen dort selbst tragen.

Gemäß einer besonders vorteilhaften Weiterbildung der Erfindung sind die lösbaren Seitenholme mit umlaufender Dichtungsstruktur gebildet, die sowohl die Dichtung an den Enden der Seitenholme wie an der Unterseite des Strangpreßprofils und an der Oberseite der Führungsschiene integral umfaßt. Diese Maßnahme erleichtert die Montage der Dichtungsmittel und erhöht die Dichtungseigenschaften aufgrund der integralen Ausbildung der einzelnen funktionellen Dichtungsteile.

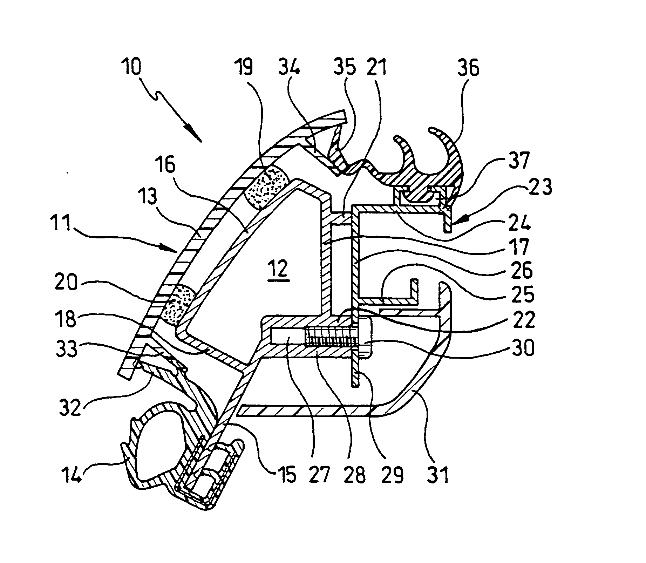

Die Erfindung wird nachfolgend anhand der einzige Figur der Zeichnung näher erläutert, die eine Querschnittansicht einer Ausführungsform der Struktur aus Seitenholm und Führungsschiene der erfindungsgemäßen Fahrzeug-Cabriodachstruktur zeigt.

In der Figur ist der Aufbau aus Seitenholm und Führungsschiene allgemein mit der Bezugsziffer 10 bezeichnet. Dieser Aufbau bildet einen Bestandteil einer Fahrzeug-Cabriodachstruktur mit Faltdach und befindet sich beiderseits des Faltdachs, diesen begrenzend und führend.

Der Seitenholm 11 des Führungsschienen-Aufbaus 10 umfaßt ein in Längsrichtung der Fahrzeug-Cabriodachstruktur gebogen verlaufendes Strangpreßprofil 12 aus Kunststoff bzw. Aluminium mit allgemein dreieckigem Querschnitt, und einen außenliegenden Außenhaut-Verkleidungsabschnitt 13, der bevorzugt aus Kunststoff hergestellt ist und ebenfalls in der genannten Längsrichtung sowie quer zu dieser gebogen verläuft. Außerdem umfaßt der Seitenholm 11 einen Träger für eine Tür- und/oder Fensterscheibendichtung 14, der einen Bestandteil des Strangpreßprofils 12 bildet und die Form eines Aufsteckstegs 15 hat, der von der Unterseite des Strangpreßprofils 12 abwärts nach außen geneigt vorspringt.

Das Strangpreßprofil umfaßt einen außenliegenden Stützsteg 16, einen innenliegenden, im wesentlichen lotrecht zur Längserstreckung des Seitenholms 11 verlaufenden Tragsteg 17 und einen unten liegenden Verbindungssteg 18, der den Stützsteg 16 mit Tragsteg 17 verbindet.

Der Stützsteg 16 hat eine Kontur, die zumindest in etwa der Kontur des Außenhaut-Verkleidungsabschnitts 13 folgt, der mit Abstand zu dem Stützsteg 16 angeordnet und mit diesem punktuell durch elastische Mittel verbunden ist, wie etwa durch voneinander beabstandete Kleberaupen, von welchen in der Figur zwei Kleberaupen 19 und 20 gezeigt sind, die im oberen und unteren Eckenbereich des im Querschnitt dreieckigen Strangpreßprofils 12 auf der Außenseite des Tragstegs 17 angeordnet sind.

Der Tragsteg 17 umfaßt einwärts vorspringende Anlagerippen 21, 22, die am oberen bzw. unteren Ende des Tragstegs 17 vorgesehen sind und als Anlagemittel für die allgemein U-förmige Führungsschiene 23 dienen. Die Führungsschiene 23 umfaßt demnach einen breiteren oberen Schenkel 24, einen kürzeren unteren Schenkel 25 und einen Basissteg 26, der den oberen Schenkel 24 mit dem unteren Schenkel 25 verbindet. Mit der Außenseite liegt der Basissteg 26 der Führungsschiene 23 gegen die Anlagerippen 21, 22 des Strangpreßprofils 12 an, und die Arretierung der Führungsschiene 23 am Strangpreßprofil 12 erfolgt durch eine Schraubverbindung. Diese Schraubverbindung umfaßt eine zur Führungsschiene 23 im wesentlichen parallele Nut 27, die am Strangpreßprofil 12 im Verbindungsbereich des Tragstegs 17 mit dem Verbindungssteg 18 in Gestalt eines innenliegend offenen Längsschlitzes in einem Nutsteg 28 gebildet ist, der einen integralen Bestandteil des Strangpreßprofils 12 darstellt. Die Führungsschiene 23 weist einen Flanschsteg auf, der eine nach unten vorspringende Verlängerung des Basisstegs 26 darstellt und von in Längsrichtung beabstandeten Bohrungen bzw. Schlitzen oder einem durchgehenden Längsschlitz parallel zu der Nut 27 durchsetzt ist. Der Flanschsteg 29 liegt am innenliegenden Rand des Nutstegs 18 an und wird im Bereich seines Schlitzes bzw. seiner Schlitze von Schrauben 30 durchsetzt, die als selbstschneidende Schrauben gebildet sind und mit dem Gewindeteil in die Nut 27 eingreifen und damit den Basissteg 26 der Führungsschiene 23 gegen die Anlagerippen 21, 22 des Strangpreßprofils 12 drücken. In den Führungsschienen, die in jeweiligen Seitenholmen beiderseits der Fahrzeugdachöffnung vorgesehen sind, ist in nicht dargestellter Weise das Faltdach der Fahrzeug-Cabriodachstruktur gleitverstellbar geführt.

Die Führungsschiene 23 dient in nicht näher dargestellter Weise auch zur Halterung einer Seitenholm-Innenblende 31, die sich nach außen bis zum Aufstecksteg 15 erstreckt.

Es sind Maßnahmen zur Abdichtung des Unterrands und des Oberrands des Außenhaut-Verkleidungsabschnitts 13 in bezug auf den Seitenholm-Führungsschienen-Aufbau 10 getroffen. Zu diesen Dichtungsmaßnahmen gehört eine am oberen Ende der Tür- und/oder Fensterscheibendichtung 14 ausgebildete Dichtlippe 32, die zum einen an der Innenseite des Außenhaut-Verkleidungsabschnitts 13 und andererseits an einer Dichtungsrippe 33 anliegt, die von dem Außenhaut- Verkleidungsabschnitt 13 im Bereich seines unteren Rands einwärts vorspringt.

Eine ähnliche Dichtungsrippe 34 ist im Bereich des oberen Rands des Außenhaut-Verkleidungsabschnitt 13, ebenfalls einwärts vorspringend gebildet, und mit dieser Dichtungsrippe sowie der Innenseite des Außenhaut-Verkleidungsabschnitts 13 steht eine Dichtlippe 35 einer Faltdachdichtung 36 im Eingriff, welche entlang der Führungsschiene 23 verläuft und in einem im Querschnitt U-förmigen Halterungskanal 37 festgesetzt ist, der von der Oberseite des oberen Schenkels 24 der Führungsschiene 23 vorspringt und einstückig mit diesem gebildet ist.

Der in der Figur gezeigte Seitenholm-Führungsschienen-Aufbau 10 kann auch als von der Karosserie lösbares Bauteil gestaltet sein. In diesem Fall befinden sich auch im Bereich der Enden dieses Aufbaus (nicht gezeigte) Dichtungsmittel, die bevorzugt integral gebildet sind mit den in Längsrichtung verlaufenden Dichtungsmitteln, der Tür- und/oder Fensterscheibendichtung 14 und der Faltdachdichtung 36.

### Bezugszeichenliste

- 10: Seitenholm-Führungsschienen-Aufbau
- 11: Seitenholm
- 12: Strangpreßprofil
- 13: Außenhaut-Verkleidungsabschnitt
- 14: Tür- und/oder Fensterscheibendichtung
- 15: Aufstecksteg
- 16: Stützsteg
- 17: Tragsteg
- 18: Verbindungssteg
- 19: Kleberaupe
- 20: Kleberaupe
- 21: Anlagerippe
- 22: Anlagerippe
- 23: Führungsschiene
- 24: oberer Schenkel
- 25: unterer Schenkel
- 26: Basissteg
- 27: Nut
- 28: Nutsteg
- 29: Flanschsteg
- 30: Schrauben
- 31: Seitenholm-Innenblende
- 32: Dichtlippe
- 33: Dichtungsrippe
- 34: Dichtungsrippe
- 35: Dichtlippe
- 36: Faltdachdichtung
- 37: Halterungskanal

## Patentansprüche

1. Fahrzeug-Cabriodachstruktur mit einem Faltdach, das im Bereich von Seitenholmen (11) beiderseits in Führungsschienen (23) verschiebbar geführt ist, **dadurch gekennzeichnet, dass** jeder Seitenholm (11) ein Strangpreßprofil (12) aufweist, an dem zur Fahrzeuginnenseite hin die jeweilige Führungsschiene (23), zur Fahrzeugaußenseite hin ein Außenhaut-Verkleidungsabschnitt (13) und an der Unterseite eine Tür- und/oder Fensterscheibendichtung (14) angebracht ist.

2. Cabrio-Dachstruktur nach Anspruch 1, **dadurch gekennzeichnet, dass** das insbesondere als hohles Bauteil gebildete Strangpreßprofil (12) Anbindungsteile oder -flächen für die jeweilige Führungsschiene (23) und den Außenhaut-Verkleidungsabschnitt (13) sowie einen Aufstecksteg für die Tür und/oder Fensterscheibendichtung enthält.

3. Cabrio-Dachstruktur nach Anspruch 1 oder 2, **dadurch gekennzeichet,** dass das Strangpreßprofil (12) einen dem beispielsweise gekrümmten Verlauf des Außenhaut-Verkleidungsabschnitt (13) zumindest grob folgenden Stützsteg (16) aufweist, mit welchem der Außenhaut-Verkleidungsabschnitt (13) punktuell elastisch verbunden ist.

4. Cabrio-Dachstruktur nach Anspruch 3, **dadurch gekennzeichnet, dass** der Außenhaut-Verkleidungsabschnitt (13) auf den Stützsteg (16) punktuell geklebt (bei 19, 20) ist.

5. Cabrio-Dachstruktur nach Anspruch 3, **dadurch gekennzeichnet, dass** der Außenhaut-Verkleidungsabschnitt (13) auf den Stützsteg (16) punktuell geclipst ist.

6. Cabrio-Dachstruktur nach einem der Ansprüche 1 bis 5, **dadurch gekennzeichnet, dass** das Strangpreßprofil (12) einen Aufstecksteg (15) für die Tür- und/oder Fensterscheibendichtung (14) aufweist.

7. Cabrio-Dachstruktur nach einem der Ansprüche 1 bis 6, **dadurch gekennzeichnet, dass** die Führungsschiene (23) getrennt vom Strangpreßprofil (12) gebildet und mit diesem verschraubt ist.

8. Cabrio-Dachstruktur nach Anspruch 7, **dadurch gekennzeichnet, dass** das Strangpreßprofil (12) innenliegend zumindest zwei sich in Längsrichtung erstreckende und quer zu dieser beabstandete Anlagerippen (21, 22) für die Führungsschiene (23) und zumindest eine hierzu im wesentlichen parallele Nut (27) zum Eingriff von die Führungsschiene (23) bzw. einen Verbindungsteil (29) derselben durchsetzenden selbstschneidenden Schrauben (30) aufweist.

9. Cabrio-Dachstruktur nach Anspruch 8, **dadurch gekennzeichnet, dass** das Strangpreßprofil (12) einen im Querschnitt im wesentlichen dreieckigen Strukturkern mit einer die Stützauflage für den Außenhaut-Verkleidungsabschnitt (13) bildenden Außenseite (16), einer Innenseite (17) zur Anbindung der Führungsschiene und dem nach außen abwärts vorspringenden Aufsteckflansch (15) für die Tür- und/oder Fensterscheibendichtung (14) aufweist.

10. Cabrio-Dachstruktur nach einem der Ansprüche 1 bis 9, **dadurch gekennzeichnet, dass** die Tür- und/oder Fensterscheibendichtung (14) zusätzlich einen Dichtungsabschnitt (32) zur Abdichtung gegenüber dem unteren Rand des Außenhaut-Verkleidungsabschnitts (13) aufweist.

11. Cabrio-Dachstruktur nach einem der Ansprüche 1 bis 10, **dadurch gekennzeichnet, dass** die Führungsschiene (23) auf ihrer Oberseite eine Faltdachdichtung (36) aufweist, welche zusätzlich einen Dichtungsabschnitt (35) zur Abdichtung gegenüber dem oberen Rand des Außenhaut-Verkleidungsabschnitts (13) aufweist.

12. Cabrio-Dachstruktur nach einem der Ansprüche 1 bis 11, **dadurch gekennzeichnet, dass** das Strangpreßprofil (12) aus Aluminium oder aus Kunststoff besteht.

13. Cabrio-Dachstruktur nach einem der Ansprüche 1 bis 12, **dadurch gekennzeichnet, dass** der Aufbau (10) aus Seitenholm (11) und Führungsschiene (23) mit der A-Säule und der B-Säule des Fahrzeugs der lösbar verbunden und gegenüber diesen endseitig mittels Dichtungen abgedichtet ist.

14. Cabrio-Dachstruktur nach Anspruch 13, **dadurch gekennzeichnet, dass** die Dichtungen (14, 36) an den Enden des Seitenholm-Führungsschienen-Aufbaus (10) an der Unterseite des Strangpreßprofils (12) und an der Oberseite der Führungsschiene (23) in eine umlaufende Dichtungsstruktur integriert sind.

## Claims

1. Roof structure for a convertible vehicle, having a folding roof which, in the region of side members (11), is displaceably guided on both sides in guide rails (23), **characterized in that** each side member (11) has an extruded profile (12) on which, towards the inside of the vehicle, the respective guide rail (23) is fitted, towards the outside of the vehicle an outer skin cladding section (13) is fitted and, on the underside, a door and/or windowpane seal (14) is fitted.

2. Roof structure for a convertible vehicle according to Claim 1, **characterized in that** the extruded profile (12), in particular formed as a hollow component, contains attachment parts or surfaces for the respective guide rail (23) and the outer skin cladding section (13) and a plug-on web for the door and/or windowpane seal.

3. Roof structure for a convertible vehicle according to Claim 1 or 2, **characterized in that** the extruded profile (12) has a supporting web (16) that follows the, for example, curved course of the outer skin cladding section (13) at least roughly and to which the outer skin cladding section (13) is connected elastically at points.

4. Roof structure for a convertible vehicle according to Claim 3, **characterized in that** the outer skin cladding section (13) is adhesively bonded to the supporting web (16) at points (at 19, 20).

5. Roof structure for a convertible vehicle according to Claim 3, **characterized in that** the outer skin cladding section (13) is clipped onto the supporting web (16) at points.

6. Roof structure for a convertible vehicle according to one of Claims 1 to 5, **characterized in that** the extruded profile (12) has a plug-on web (15) for the door and/or windowpane seal (14).

7. Roof structure for a convertible vehicle according to one of Claims 1 to 6, **characterized in that** the guide rail (23) is formed separately from the extruded profile (12) and is screwed to the latter.

8. Roof structure for a convertible vehicle according to Claim 7, **characterized in that**, on the inside, the extruded profile (12) has at least two contact ribs (21, 22) extending in the longitudinal direction and spaced apart transversely from the latter for the guide rail (23), and at least one groove (27) substantially parallel thereto for the engagement of self-tapping screws (30) passing through the guide rail (23) or a connecting part (29) of the same.

9. Roof structure for a convertible vehicle according to Claim 8, **characterized in that** the extruded profile (12) has a structural core that is substantially triangular in cross section, having an outer side (16) forming the supporting support for the outer skin cladding section (13), an inner side (17) for attaching the guide rail, and the plug-on flange (15), projecting outwards and downwards, for the door and/or windowpane seal (14).

10. Roof structure for a convertible vehicle according to one of Claims 1 to 9, **characterized in that** the door and/or windowpane seal (14) additionally has a seal section (32) for sealing with respect to the lower edge of the outer skin cladding section (13).

11. Roof structure for a convertible vehicle according to one of Claims 1 to 10, **characterized in that**, on its upper side, the guide rail (23) has a folding roof seal (36) which additionally has a seal section (35) for sealing with respect to the upper edge of the outer skin cladding section (13).

12. Roof structure for a convertible vehicle according to one of Claims 1 to 11, **characterized in that** the extruded profile (12) consists of aluminium or of plastics.

13. Roof structure for a convertible vehicle according to one of Claims 1 to 12, **characterized in that** the structure (10) comprising side member (11) and guide rail (23) is detachably connected to the A pillar and the B pillar of the vehicle and is sealed off with respect to the latter at the ends by means of seals.

14. Roof structure for a convertible vehicle according to Claim 13, **characterized in that** the seals (14, 36) at the ends of the side member guide rail structure (10) on the underside of the extruded profile (12) and on the upper side of the guide rail (23) are integrated into a circumferential seal structure.

## Revendications

1. Structure de toit pour véhicule cabriolet, comportant un toit repliable guidé à coulissement de part et d'autre dans la région de longerons latéraux (11), dans des glissières de guidage (23), **caractérisée par le fait que** chaque longeron latéral (11) présente un profilé extrudé (12) sur lequel la glissière de guidage considérée (23) est implantée en direction de la face intérieure du véhicule, une zone (13) d'habillage de la tôle extérieure est implantée en direction de la face extérieure dudit véhicule, et une garniture (14) d'étanchement de porte et/ou de vitre est implantée à la face inférieure.

2. Structure de toit de cabriolet, selon la revendication 1, **caractérisée par le fait que** le profilé extrudé (12), revêtant notamment la forme d'une pièce structurelle creuse, comprend des parties ou surfaces de rattachement destinées à la glissière de guidage considérée (23) et à la zone (13) d'habillage de la tôle extérieure, ainsi qu'à une membrure de crantage affectée à la garniture d'étanchement de porte et/ou de vitre.

3. Structure de toit de cabriolet, selon la revendication 1 ou 2, **caractérisée par le fait que** le profilé extrudé (12) comporte une membrure d'appui (16) dont la forme épouse, au moins grossièrement, le tracé de la zone (13) d'habillage de la tôle extérieure, doté par exemple d'une allure courbe, et à laquelle ladite zone (13) d'habillage de la tôle extérieure est reliée ponctuellement de manière élastique.

4. Structure de toit de cabriolet, selon la revendication 3, **caractérisée par le fait que** la zone (13) d'habillage de la tôle extérieure est collée ponctuellement (en 19, 20) sur la membrure d'appui (16).

5. Structure de toit de cabriolet, selon la revendication 3, **caractérisée par le fait que** la zone (13) d'habillage de la tôle extérieure est clipsée ponctuellement sur la membrure d'appui (16).

6. Structure de toit de cabriolet, selon l'une des revendications 1 à 5, **caractérisée par le fait que** le profilé extrudé (12) comporte une membrure de crantage (15) affectée à la garniture (14) d'étanchement de porte et/ou de vitre.

7. Structure de toit de cabriolet, selon l'une des revendications 1 à 6, **caractérisée par le fait que** la glissière de guidage (23) est façonnée distinctement du profilé extrudé (12), avec lequel elle est solidarisée par vissage.

8. Structure de toit de cabriolet, selon la revendication 7, **caractérisée par le fait que** le profilé extrudé (12) offre, intérieurement, au moins deux nervures de contact (21, 22) destinées à la glissière de guidage (23), s'étendant dans la direction longitudinale et transversalement à distance de cette dernière ; et au moins une rainure (27) sensiblement parallèle à ladite glissière et conçue pour la venue en prise de vis autotaraudeuses (30) traversant, respectivement, ladite glissière de guidage (23) ou une partie de liaison (29) de celle-ci.

9. Structure de toit de cabriolet, selon la revendication 8, **caractérisée par le fait que** le profilé extrudé (12) est muni d'un noyau structurel de section transversale sensiblement triangulaire comprenant une face extérieure (16) matérialisant l'appui conféré à la zone (13) d'habillage de la tôle extérieure ; une face intérieure (17) destinée au rattachement de la glissière de guidage ; et l'aile de crantage (15) saillant extérieurement vers le bas et dédiée à la garniture (14) d'étanchement de porte et/ou de vitre.

10. Structure de toit de cabriolet, selon l'une des revendications 1 à 9, **caractérisée par le fait que** la garniture (14) d'étanchement de porte et/ou de vitre est additionnellement pourvue d'une zone d'étanchement (32), pour assurer l'étanchéité vis-à-vis du bord inférieur de la zone (13) d'habillage de la tôle extérieure.

11. Structure de toit de cabriolet, selon l'une des revendications 1 à 10, **caractérisée par le fait que** la glissière de guidage (23) offre, à sa face supérieure, une garniture (36) d'étanchement du toit repliable qui est additionnellement dotée d'une zone d'étanchement (35), pour assurer l'étanchéité vis-à-vis du bord supérieur de la zone (13) d'habillage de la tôle extérieure.

12. Structure de toit de cabriolet, selon l'une des revendications 1 à 11, **caractérisée par le fait que** le profilé extrudé (12) consiste en de l'aluminium ou en une matière plastique.

13. Structure de toit de cabriolet, selon l'une des revendications 1 à 12, **caractérisée par le fait que** l'ensemble structurel (10), constitué d'un longeron latéral (11) et de la glissière de guidage (23), est relié amoviblement à la colonne A et à la colonne B du véhicule vis-à-vis desquelles l'étanchéité est assurée, aux extrémités, au moyen de garnitures d'étanchement.

14. Structure de toit de cabriolet, selon la revendication 13, **caractérisée par le fait que** les garnitures d'étanchement (14, 36) sont intégrées dans une structure périphérique d'étanchement aux extrémités de l'ensemble structurel (10) longeron longitudinal-glissiére de guidage, à la face inférieure du profilé extrudé (12) et à la face supérieure de ladite glissière de guidage (23).
